(19) **Europäisches Patentamt**

**European Patent Office**

**Office européen des brevets**

(11) **EP 1 642 096 B1**

(12) **FASCICULE DE BREVET EUROPEEN**

(45) Date de publication et mention
de la délivrance du brevet:
**22.11.2006 Bulletin 2006/47**

(51) Int Cl.:
***G01G 19/08*** *(2006.01)*

(21) Numéro de dépôt: **04767560.8**

(86) Numéro de dépôt international:
**PCT/FR2004/001719**

(22) Date de dépôt: **02.07.2004**

(87) Numéro de publication internationale:
**WO 2005/012848 (10.02.2005 Gazette 2005/06)**

(54) **PROCEDE ET DISPOSITIF D'ESTIMATION DE LA MASSE TOTALE D'UN VEHICULE AUTOMOBILE**

VERFAHREN UND EINRICHTUNG ZUR SCHÄTZUNG DER GESAMTMASSE EINES KRAFTFAHRZEUGS

METHOD AND DEVICE FOR ESTIMATING THE TOTAL MASS OF A MOTOR VEHICLE

(84) Etats contractants désignés:
**AT BE BG CH CY CZ DE DK EE ES FI FR GB GR HU IE IT LI LU MC NL PL PT RO SE SI SK TR**

(30) Priorité: **04.07.2003 FR 0308224**

(43) Date de publication de la demande:
**05.04.2006 Bulletin 2006/14**

(73) Titulaire: **Renault s.a.s.**
**92100 Boulogne Billancourt (FR)**

(72) Inventeurs:
• **LEMINOUX, Gérald**
**F-78980 Longnes (FR)**

• **PLEVIN, Eric**
**F-92500 Rueil Malmaison (FR)**
• **POTHIN, Richard**
**F-92420 Vaucresson (FR)**

(74) Mandataire: **Davies, Owen Robert Treharne**
**RENAULT TECHNOCENTRE**
**Département Propriété Intellectuelle**
**Sce 00267 TCR GRA 2 36**
**1, avenue de Golf**
**78288 Guyancourt cedex (FR)**

(56) Documents cités:
**WO-A-03/016837        US-B1- 6 249 735**

**Description**

La présente invention concerne un procédé et un dispositif d'estimation de la masse totale d'un véhicule automobile.

La connaissance de la masse totale d'un véhicule automobile est nécessaire au bon fonctionnement de nombreux dispositifs embarqués dans le véhicule, comme des dispositifs de gestion de freinage ou de gestion de boîte de vitesse automatique. En effet, dans de tels dispositifs, l'utilisation d'une masse nominale ne permet pas une gestion optimale du véhicule.

Il est donc souhaitable d'obtenir rapidement une estimation fiable de la masse du véhicule, même lorsque le véhicule est engagé sur une pente. Il existe des dispositifs d'évaluation de masse d'un véhicule automobile.

Le document US-6249735 décrit un procédé d'estimation d'état d'un véhicule comprenant une étape d'estimation de la masse du véhicule à partir du couple moteur et de l'accélération du véhicule durant un changement de vitesse. Le calcul de l'accélération est effectué par approximation discrète de la dérivée de la vitesse et par filtrage, ce qui entraîne des problèmes de bruits et influe sur la précision et la robustesse de l'estimation.

Le document US-6167357 calcule l'accélération du véhicule par intégration de sa vitesse, mais ne tient pas compte de la déclivité de la surface sur laquelle est engagé le véhicule.

Le document WO-03/016837 porte sur un procédé d'estimation de la masse d'un véhicule qui est conduit sur un route ayant un gradient variable. On mesure la vitesse du véhicule pour générer une donnée d'entrée pour un dispositif de calcul et on mesure une variable qui comprend une force longitudinale agissant sur le véhicule pour générer une donnée d'entrée pour le dispositif de calcul.

Les méthodes qui n'utilisent pas l'accélération du véhicule sont certes moins bruites, mais ne prennent pas en compte la déclivité de la surface sur laquelle est engagé le véhicule.

L'invention a pour objet d'estimer la masse totale d'un véhicule automobile en utilisant l'accélération du véhicule, afin de tenir compte de la déclivité de la surface sur laquelle est engagé le véhicule, mais en réduisant les problèmes de bruits sur les paramètres mesurés par capteur ou calculés.

Le procédé selon un aspect de l'invention, permet d'estimer la masse totale d'un véhicule automobile. On estime la masse du véhicule par un algorithme de moindres carrés récursif, qui comprend un calcul de l'accélération longitudinale du véhicule, à partir de l'équation fondamentale de la dynamique, par analyse d'erreurs, au moyen d'une variation d'accélération due à des erreurs. Ces erreurs comprennent une erreur sur la masse du véhicule, une erreur sur la déclivité de la surface sur laquelle est engagé le véhicule, et des erreurs de modèle, ladite déclivité étant fournie par un capteur de pente ou par des moyens d'estimation de déclivité.

Le procédé permet d'estimer la masse totale du véhicule, en tenant compte de la déclivité de la surface sur laquelle il est engagé, et sans dériver la vitesse, ce qui permet d'améliorer la précision de l'estimation.

Dans un mode de mise en oeuvre préféré, on traite des données comprenant une instruction de réinitialisation, la vitesse du véhicule, la vitesse de rotation du moteur, le couple transmis par le moteur, une détection d'actionnement de l'embrayage, une détection de l'actionnement du freinage, et une détection de virage du véhicule, pour calculer l'accélération longitudinale du véhicule, une résultante des forces motrices aérodynamique et de roulement, et une masse équivalente due aux forces d'inertie de transmission.

Dans un mode de mise en oeuvre avantageux, on autorise ledit traitement desdites données lorsqu'elles restent respectivement dans des intervalles de valeurs prédéterminés assurant une validité du modèle. On estime la masse totale du véhicule par un algorithme de moindres carrés récursif, et on supervise l'estimation de la masse totale du véhicule, en fournissant une masse prédéterminée tant que ledit algorithme n'a pas convergé; en figeant la masse estimée lorsqu'un critère de convergence prédéterminé est atteint.

Dans un mode de mise en oeuvre préféré, on traite en outre un bouclage de la masse estimée, et on calcule ladite variation d'accélération due à des erreurs comprenant une erreur sur la variation de la masse du véhicule par rapport à une masse de référence, une erreur sur la déclivité de la surface sur laquelle est engagé le véhicule, et des erreurs de modèle lors du traitement des données. On estime en outre une accélération que fournirait un capteur de pente s'il y en avait un, utilisée dans ledit algorithme de moindres carrés récursif, ladite estimation d'accélération de capteur de pente utilisant ladite variation d'accélération dues à des erreurs.

En outre, on estime la déclivité à partir de ladite variation d'accélération due à des erreurs, et ledit algorithme de moindres carrés récursif dépend de ladite déclivité et comprend deux modes, un mode plat, lorsque la déclivité est située dans un intervalle prédéterminé de valeurs correspondant à une surface plane, et un mode pente dans les autre cas.

Dans un mode de mise en oeuvre avantageux, lors du traitement des données, on estime une accélération que fournirait un capteur de pente s'il y en avait un, au moyen de la déclivité de la surface sur laquelle est engagé le véhicule, ladite déclivité étant fournie par des moyens d'estimation de déclivité et ladite accélération de capteur de pente étant utilisée dans ledit algorithme de moindres carrés récursif.

Dans un mode de mise en oeuvre préféré, on traite une accélération fournie par un capteur de pente étant utilisée dans ledit algorithme de moindres carrés récursif.

Dans un mode de mise en oeuvre avantageux, on calcule la déclivité de la surface sur laquelle est engagé le véhicule, à partir de ladite accélération fournie par ledit capteur de pente et dudit calcul d'accélération longitudinale du véhicule. Ledit algorithme de moindres carrés récursif dépend de ladite déclivité et comprend deux modes, un mode plat, lorsque la déclivité est située dans un intervalle prédéterminé de valeurs correspondant à une surface plane, et un mode pente dans les autre cas.

Selon un aspect de l'invention, il est également proposé un dispositif d'estimation de la masse totale d'un véhicule automobile, comprenant des capteurs de vitesse de roues, un capteur de couple du moteur, un capteur de régime de rotation du moteur, un capteur de position de la pédale d'embrayage, un capteur de position de la pédale de freinage, des moyens de détection de virage du véhicule, et une unité de commande électronique à laquelle sont raccordés lesdits capteurs. L'unité de commande électronique comprend un moyen de réinitialisation, des moyens d'estimation de la masse totale du véhicule par un algorithme de moindres carrés récursif, comprenant un calcul de l'accélération longitudinale du véhicule, à partir de l'équation fondamentale de la dynamique, par analyse d'erreurs. L'analyse d'erreur s'effectue au moyen d'une variation d'accélération due à des erreurs comprenant une erreur sur une variation de la masse du véhicule par rapport à une masse de référence, une erreur sur la déclivité de la surface sur laquelle est engagé le véhicule, et des erreurs de modèle. L'unité électronique de commande comprend en outre des moyens de traitement des données transmises par lesdits capteurs, des moyens d'autorisation dudit traitement desdites données lorsqu'elles restent respectivement dans des intervalles de valeurs prédéterminés assurant une validité du modèle, et des moyens de supervision pour fournir une masse par défaut tant que ledit algorithme n'a pas convergé, en figeant la masse estimée lorsqu'un critère de convergence prédéterminé est atteint.

Dans un mode de mise en application préféré, le dispositif comprend en outre un capteur de pente apte à transmettre aux moyens de traitement une accélération longitudinale du véhicule.

D'autres buts, caractéristiques et avantages de l'invention apparaîtront à la lecture de la description suivante, donnée uniquement à titre d'exemple nullement limitatif, et faite en référence aux dessins annexés sur lesquels :

- la figure 1 illustre l'estimation de la masse totale selon un aspect de l'invention ;
- la figure 2 illustre l'estimation de la masse totale selon un aspect de l'invention, avec une estimation de déclivité ;
- la figure 3 illustre l'estimation de la masse totale selon un aspect de l'invention, avec une accélération fournie par un capteur de pente ;
- la figure 4 illustre l'estimation de la masse totale selon un aspect de l'invention, avec une accélération fournie par un capteur de pente et une estimation de déclivité ;

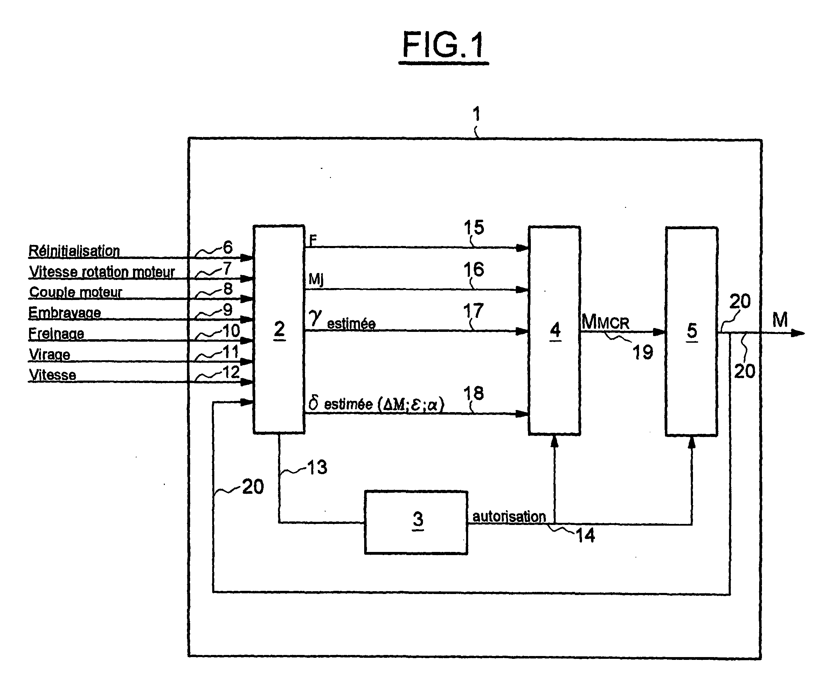

Sur la figure 1, on a représenté schématiquement un premier dispositif d'estimation 1 de la masse totale d'un véhicule automobile, comprenant un bloc de traitement de données 2, un bloc d'autorisation de fonctionnement 3 du dispositif 1, un bloc d'estimation de la masse 4 par un algorithme de moindres carrés récursif, et un bloc de supervision 5.

Le bloc de traitement 2 reçoit en entrée des données comprenant une information de réinitialisation par la connexion 6, la vitesse de rotation du moteur par une connexion 7, le couple fourni par le moteur par une connexion 8, une information de l'état d'actionnement de l'embrayage par une connexion 9, une information de freinage par une connexion 10 demandé par le conducteur, une information de virage du véhicule par une connexion 11, et la vitesse du véhicule par une connexion 12.

Les blocs 2 et 3 communiquent par une connexion 13, et le bloc 3 d'autorisation communique avec les blocs 4 et 5 par une connexion 14.

Le bloc 2 calcule une résultante F des forces motrice, aérodynamique, et de roulement, une masse équivalente $M_j$ due aux forces d'inertie de transmission, et une accélération $\gamma_{estimée}$ du véhicule, et les transmet au bloc 4 d'estimation respectivement par des connexions 15, 16 et 17. Le bloc 2 calcule en outre une variation d'accélération $\delta_{estimée}(\Delta M, \varepsilon, \alpha)$ due à des paramètres comprenant une variation de masse $\Delta M$ du véhicule par rapport à une masse de référence, des erreurs de modèle $\varepsilon$, et la déclivité $\alpha$ de la surface sur laquelle est engagée le véhicule, et la transmet au bloc 4 par une connexion 18. La déclivité est fournie par des moyens d'estimation de déclivité, par exemple sous forme d'un capteur de pente ou par des moyens d'estimation de déclivité équivalentes.

Le bloc 4 estime par un algorithme de moindres carrés récursif une masse $M_{MCR}$ du véhicule et la transmet au bloc de supervision 5 par une connexion 19. Le bloc de supervision traite alors cette entrée et fournit en sortie la masse totale M estimée par une connexion 20, qui est bouclée en entrée du bloc de traitement 2, pour le calcul de ladite variation d'accélération $\delta_{estimée}(\Delta M, \varepsilon, \alpha)$.

L'information de réinitialisation peut par exemple provenir d'une ouverture de porte, qui souvent est synonyme de changement du nombre de passager, ou de chargement d'objets, ou encore de déchargement d'objets. Dans ces cas, la masse change, et il faut réinitialiser l'estimation de la masse du véhicule.

Le bloc 2 calcule la résultante F par les relations suivantes :

$$\begin{cases} F = F_{moteur} - F_{aéro} - F_{roulement} \\ F_{aéro} + F_{roulement} = \theta_1 + \theta_2.V^2 \\ F_{moteur} = \dfrac{r_{boîte}\left(C_{moteur} - J_{trans}\dfrac{d\omega_{moteur}}{dt}\right)}{R_{roue}} \\ r_{boîte} = \dfrac{V}{R_{roue}.\omega_{moteur}.r_{pont}} \end{cases}$$

dans lesquelles :

F est la résultante des forces motrice $F_{moteur}$, aérodynamique $F_{aéro}$, et de roulement $F_{roulement}$, en N ;

$\theta_1$ et $\theta_2$ sont des paramètres prédéterminés dépendant du véhicule, permettant d'estimer $F_{aéro} + F_{roulement}$, respectivement en N et en kg/m;

$r_{boîte}$ est le rapport, pour une vitesse engagée, d'une vitesse de rotation d'un arbre de sortie et d'une vitesse de rotation d'un arbre d'entrée d'un embrayage du véhicule ;

$C_{moteur}$ est le couple du moteur en Nm ;

$R_{roue}$ est le rayon des roues du véhicule, en m ;

$\omega_{moteur}$ représente la vitesse de rotation du moteur, en rad/s ;

$J_{trans}$ représente l'inertie de l'ensemble moteur et transmission, en kg m$^2$/s ; et

$r_{pont}$ est la démultiplication de pont, adimensionnelle.

Le bloc 2 calcule en outre une masse équivalente $M_j$ due aux forces d'inertie de transmission entre le moteur et les roues, au moyen d'une fonction prédéterminée du rapport $r_{boîte}$.

De plus, le bloc 2 calcule l'accélération $\gamma_{estimée}$ et la variation d'accélération $\delta_{estimée}(\Delta M, \varepsilon, \alpha)$ à laquelle on impose une dynamique nulle (dérivée par rapport au temps nulle) au moyen du système itératif suivant :

$$\begin{cases} \gamma_{estimée} = \dfrac{F}{M_0} + \delta_{estimée}(\Delta M, \varepsilon, \alpha) = \dfrac{F}{M_0} + \delta(\Delta M, \varepsilon) + g\alpha \\ \gamma_{capteur} = \gamma_{estimée} - g\alpha \end{cases}$$

dans lequel $M_0$ est une masse prédéterminée de référence, par exemple la masse du véhicule à vide.

On obtient la relation suivante :

$\gamma_{estimée} - \delta_{estimée}(\Delta M, \varepsilon, \alpha) = \gamma_{capteur} - \delta(\Delta M, \varepsilon)$ qui permet de construire un signal fourni par un capteur de pente s'il y en avait un ou par des moyens d'estimation de déclivité équivalentes, au terme près $\delta(\Delta M, \varepsilon)$ qui représente une variation d'accélération due à la variation de masse du véhicule, et aux erreurs du modèle. De même, on considère que $\delta_{estimée}(\Delta M, \varepsilon, \alpha)$ est une approximation de l'accélération $g\alpha$ due à la déclivité, au terme près $\delta(\Delta M, \varepsilon)$. Ce terme $\delta(\Delta M, \varepsilon)$ sera d'autant plus négligeable que les estimations de masse, de freinage moteur, et de forces résistantes seront correctes, à ces fins, on réinjecte l'estimation de masse en entrée du bloc 2.

Le bloc 4 estime une masse $M_{MCR}$ du véhicule par l'algorithme de moindres carrés récursif. Il peut fonctionner en deux modes, pente et plat, si l'on estime la déclivité, ou bien uniquement en un mode pente, si on n'estime pas la déclivité.

On résout par ledit algorithme, l'équation $y = M_{MCR}.r$, avec $r = \gamma_{capteur}$ lorsqu'on utilise un unique mode pente.

On peut également utiliser deux modes d'estimations, comprenant un mode plat, et un mode pente, choisi selon la valeur estimée de la déclivité. Si la déclivité estimée est comprise dans un intervalle prédéterminé définissant le mode plat, alors on utilisera le mode plat défini par $r = \dfrac{dV}{dt} = \gamma_{estimée}$ où V est la vitesse du véhicule, sinon on utilisera le mode pente défini par $r = \gamma_{capteur}$.

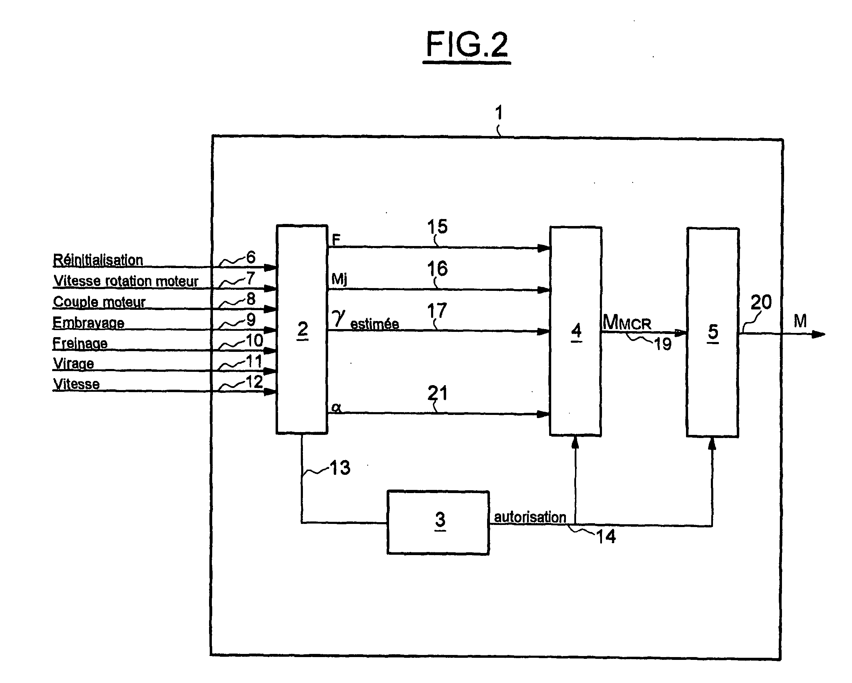

Sur la figure 2, on a représenté schématiquement un second dispositif d'estimation 1 de la masse totale d'un véhicule automobile. La masse finale fournie par le bloc 4 n'est pas redirigée en entrée du bloc 2. Le bloc 2 ne transmet pas la variation d'accélération $\delta_{estimée}(\Delta M,\varepsilon,\alpha)$ au bloc 4, mais transmet une valeur de la déclivité $\alpha$ de la surface sur laquelle est engagé le véhicule par une connexion 21. Cette déclivité est par exemple fournie par un capteur de pente ou est estimée par le bloc 2 au moyen d'un autre dispositif d'estimation de déclivité.

Le bloc 2 estime l'accélération $\gamma_{estimée}$ du véhicule au moyen des relations suivantes :

$$\begin{cases} \gamma_{estimée} = \dfrac{dV}{dt} = \dfrac{1}{M_0}F + \delta_{estimée}(\Delta M,\varepsilon,\alpha) + K_1\left(V_{capteur} - V_{estimée}\right) \\ \delta_{estimée}(\Delta M,\varepsilon,\alpha) = 0 + K_2\left(V_{capteur} - V_{estimée}\right) \end{cases}$$

dans lesquelles :

$V_{capteur}$ est la vitesse du véhicule fournie par un capteur, en m/s ;
$V_{estimée}$ est la vitesse du véhicule estimée, en m/s ;
$M_0$ est une masse de référence du véhicule ; et
$K_1$ et $K_2$ sont des paramètres de calculs prédéterminés de telle manière à ce qu'il y ait convergence, respectivement en $s^{-1}$ et en $s^{-2}$.

Possédant une estimation fiable de la déclivité $\alpha$ et de l'accélération $\gamma_{estimée}$ , on peut construire un signal $\gamma_{capteur}$ fourni par un capteur de pente s'il y en avait un au moyen de la relation suivante :

$$\gamma_{capteur} = \frac{dV}{dt} - g\alpha = \gamma_{estimée} - g\alpha$$

car $g.\sin(\alpha) \cong g\alpha$

Le bloc 4 estime une masse $M_{MCR}$ du véhicule par l'algorithme de moindres carrés récursif, comme décrit précédemment. Il peut fonctionner en deux modes, pente et plat, si l'on estime la déclivité, ou bien uniquement en un mode pente, si on n'estime pas la déclivité.

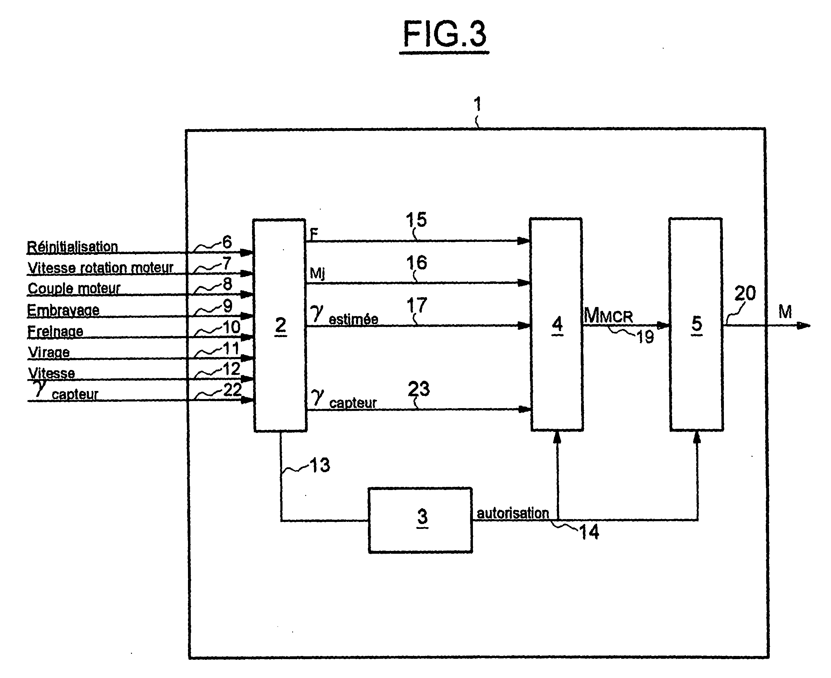

Sur la figure 3, on a représenté schématiquement un troisième dispositif d'estimation 1 de la masse totale d'un véhicule automobile comprenant un capteur de pente 23 fournissant au bloc 2 une accélération du véhicule $\gamma$capteur par une connexion 22. Le bloc 2 transmet également l'accélération du véhicule $\gamma$capteur au bloc 4 par une connexion 23. Le bloc 4 fonctionnant dans ce cas uniquement avec un seul mode, le mode pente, le bloc 2 ne transmet pas au bloc 4 de déclivité ou d'accélération calculée.

Le bloc 4 estime une masse $M_{MCR}$ du véhicule par l'algorithme de moindres carrés récursif, comme décrit précédemment, au moyen d'un unique mode pente.

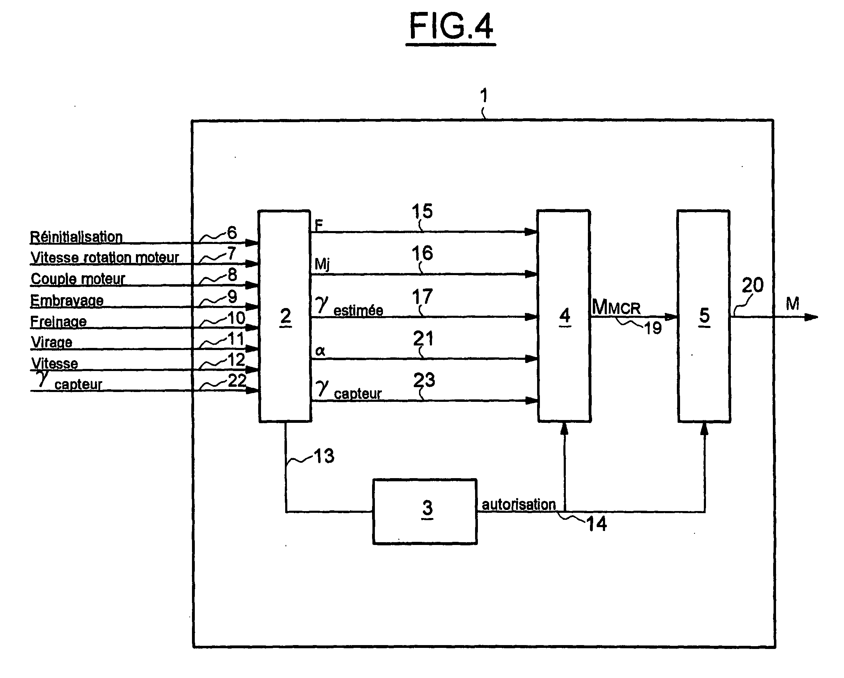

Sur la figure 4, on a représenté schématiquement un troisième dispositif d'estimation 1 de la masse totale d'un véhicule automobile comprenant un capteur de pente, et dont le bloc 4 fonctionne en deux modes, pente et plat, comme décrit précédemment.

L'invention permet d'obtenir une estimation fiable et précise de la masse totale d'un véhicule, en tenant compte de la déclivité sur laquelle est engagé le véhicule.

L'invention permet également de limiter les problèmes de bruits sur les mesures fournies par des capteurs ou estimées.

## Revendications

**1.** Procédé d'estimation de la masse totale d'un véhicule automobile, **caractérisé par le fait que** l'on estime la masse (M) du véhicule par un algorithme de moindres carrés récursif, comprenant un calcul de l'accélération longitudinale du véhicule ($\gamma_{estimée}$), à partir de l'équation fondamentale de la dynamique, par analyse d'erreurs, au moyen d'une variation d'accélération ($\delta_{estimée}(\Delta M,\varepsilon,\alpha)$) due à des erreurs comprenant une erreur sur une variation ($\Delta M$) de la masse du véhicule par rapport à une masse de référence, une erreur sur la déclivité ($\alpha$) de la surface sur laquelle est engagé le véhicule, et des erreurs de modèle ($\varepsilon$), ladite déclivité ($\alpha$) étant fournie par un capteur de pente (23) ou par des moyens d'estimation de déclivité.

**2.** Procédé selon la revendication 1, **caractérisé par le fait qu'**il comprend des étapes durant lesquelles :

on traite des données comprenant une instruction de réinitialisation, la vitesse du véhicule (V), la vitesse de rotation du moteur ($\omega_{moteur}$), le couple transmis par le moteur ($C_{moteur}$), une détection d'actionnement de l'embrayage, une détection de l'actionnement du freinage, et une détection de virage du véhicule, pour calculer l'accélération longitudinale du véhicule ($\gamma_{estimée}$), une résultante (F) des forces motrices ($F_{moteur}$), aérodynamique ($F_{aéro}$), et de roulement ($F_{roulement}$), et une masse équivalente ($M_j$) due aux forces d'inertie de transmission.

**3.** Procédé selon la revendication 2, **caractérisé par le fait qu'**il comprend les étapes durant lesquelles :

on autorise ledit traitement desdites données lorsqu'elles restent respectivement dans des intervalles de valeurs prédéterminés assurant une validité du modèle ;
on estime la masse totale ($M_{MCR}$) du véhicule par un algorithme de moindres carrés récursif ;
on supervise l'estimation de la masse totale du véhicule, en fournissant une masse prédéterminée tant que ledit algorithme n'a pas convergé, en figeant la masse estimée lorsqu'un critère de convergence prédéterminé est atteint.

**4.** Procédé selon la revendication 3, **caractérisé par le fait qu'**on traite en outre un bouclage de la masse estimée, on calcule en outre ladite variation d'accélération ($\delta_{estimée}(\Delta M, \varepsilon, \alpha)$) due à des erreurs comprenant une erreur sur la variation ($\Delta M$) de la masse du véhicule par rapport à une masse de référence, une erreur sur la déclivité ($\alpha$) de la surface sur laquelle est engagé le véhicule, et des erreurs de modèle ($\varepsilon$) lors du traitement des données, et on estime une accélération ($\gamma_{capteur}$) que fournirait un capteur de pente s'il y en avait un, utilisée dans ledit algorithme de moindres carrés récursif, ladite estimation d'accélération de capteur de pente ($\gamma_{capteur}$) utilisant ladite variation d'accélération ($\delta_{estimée}(\Delta M, \varepsilon, \alpha)$) dues à des erreurs.

**5.** Procédé selon la revendication 4, **caractérisé par le fait que** l'on estime la déclivité à partir de ladite variation d'accélération due à des erreurs ($\delta_{estimée}(\Delta M, \varepsilon, \alpha)$), et que ledit algorithme de moindres carrés récursif dépend de ladite déclivité ($\alpha$) et comprend deux modes, un mode plat, lorsque la déclivité ($\alpha$) est située dans un intervalle prédéterminé de valeurs correspondant à une surface plane, et un mode pente dans les autre cas.

**6.** Procédé selon l'une quelconques des revendications 3 à 5, **caractérisé par le fait que** lors du traitement des données, on estime en outre une accélération ($\gamma_{capteur}$) que fournirait un capteur de pente s'il y en avait un, au moyen de la déclivité ($\alpha$) de la surface sur laquelle est engagé le véhicule, ladite déclivité ($\alpha$) étant fournie par des moyens d'estimation de déclivité et ladite accélération de capteur de pente ($\gamma_{capteur}$) étant utilisée dans ledit algorithme de moindres carrés récursif.

**7.** Procédé selon l'une quelconques des revendications 3 à 6, **caractérisé par le fait que** l'on traite en outre une accélération ($\gamma_{capteur}$) fournie par un capteur de pente étant utilisée dans ledit algorithme de moindres carrés récursif.

**8.** Procédé selon la revendication 7, **caractérisé par le fait que** l'on calcule en outre la déclivité ($\alpha$) de la surface sur laquelle est engagé le véhicule, à partir de ladite accélération ($\gamma_{capteur}$) fournie par ledit capteur de pente et dudit calcul d'accélération longitudinale du véhicule ($\gamma_{estimée}$), et que ledit algorithme de moindres carrés récursif dépend de ladite déclivité ($\alpha$) et comprend deux modes, un mode plat, lorsque la déclivité ($\alpha$) est située dans un intervalle prédéterminé de valeurs correspondant à une surface plane, et un mode pente dans les autre cas.

**9.** Dispositif d'estimation de la masse totale d'un véhicule automobile, comprenant des capteurs de vitesse de roues, un capteur de couple du moteur, un capteur de régime de rotation du moteur, un capteur de position de la pédale d'embrayage, un capteur de position de la pédale de freinage, des moyens de détection de virage du véhicule, et une unité de commande électronique à laquelle sont raccordés lesdits capteurs, **caractérisé par le fait que** l'unité de commande électronique comprend :

un moyen de réinitialisation ;
des moyens d'estimation (4) de la masse totale ($M_{MCR}$) du véhicule par un algorithme de moindres carrés récursif, comprenant un calcul de l'accélération longitudinale du véhicule ($\gamma_{estimée}$), à partir de l'équation fondamentale de la dynamique, par analyse d'erreurs, au moyen d'une variation d'accélération ($\delta_{estimée}(\Delta M, \varepsilon, \alpha)$) due à des erreurs comprenant une erreur sur une variation ($\Delta M$) de la masse du véhicule par rapport à une masse de référence, une erreur sur la déclivité ($\alpha$) de la surface sur laquelle est engagé le véhicule, et des erreurs de modèle ($\varepsilon$) ;
des moyens de traitement (2) des données transmises par lesdits capteurs ;
des moyens d'autorisation (3) dudit traitement desdites données lorsqu'elles restent respectivement dans des intervalles de valeurs prédéterminés assurant une validité du modèle ; et

des moyens de supervision (5) pour fournir une masse par défaut tant que ledit algorithme n'a pas convergé, en figeant la masse estimée lorsqu'un critère de convergence prédéterminé est atteint.

**10.** Dispositif selon la revendication 9, **caractérisé par le fait qu'**il comprend en outre un capteur de pente apte à transmettre aux moyens de traitement une accélération longitudinale du véhicule ($\gamma_{capteur}$).

**Claims**

**1.** Method of estimating the total mass of a motor vehicle, **characterized in that** the mass (M) of the vehicle is estimated through a recursive least squares algorithm, comprising a calculation of the longitudinal acceleration of the vehicle ($\gamma_{estimated}$), on the basis of the fundamental equation of dynamics, through error analysis, by means of a variation in acceleration ($\delta_{estimated}(\Delta M,\varepsilon,\alpha)$) due to errors comprising an error in a variation ($\Delta M$) of the mass of the vehicle with respect to a reference mass, an error in the declivity ($\alpha$) of the surface on which the vehicle is engaged, and model errors ($\varepsilon$), the said declivity ($\alpha$) being provided by a slope sensor (23) or by declivity estimation means.

**2.** Method according to Claim 1, **characterized in that** it comprises steps during which

data comprising a reinitialization instruction, the speed of the vehicle (V), the speed of rotation of the engine ($\omega_{engine}$), the torque transmitted by the engine ($C_{engine}$), a detection of actuation of the clutch, a detection of the actuation of braking, and a detection of cornering of the vehicle, are processed to calculate the longitudinal acceleration of the vehicle ($\gamma_{estimated}$), a resultant (F) of the motive forces ($F_{engine}$), aerodynamic force ($F_{aero}$), and rolling force ($F_{rolling}$), and an equivalent mass ($M_j$) due to the transmission inertia forces.

**3.** Method according to Claim 2, **characterized in that** it comprises the steps during which,

the said processing of the said data is authorized when they remain respectively in intervals of predetermined values ensuring validity of the model;

the total mass ($M_{MCR}$) of the vehicle is estimated through a recursive least squares algorithm;

the estimation of the total mass of the vehicle is supervised, by providing a predetermined mass so long as the said algorithm has not converged, by pegging the estimated mass when a predetermined convergence criterion is attained.

**4.** Method according to Claim 3, **characterized in that** a looping of the estimated mass is moreover processed, the said variation in acceleration ($\delta_{estimated}(\Delta M,\varepsilon,\alpha)$) due to errors comprising an error in the variation ($\Delta M$) of the mass of the vehicle with respect to a reference mass, an error in the declivity ($\alpha$) of the surface on which the vehicle is engaged, and model errors ($\varepsilon$) during the processing of the data are moreover calculated, and an acceleration ($\gamma_{sensor}$) that would be provided by a slope sensor if there were one and which is used in the said recursive least squares algorithm is estimated, the said slope sensor acceleration estimation ($\gamma_{sensor}$) using the said variation in acceleration ($\delta_{estimated}(\Delta M,\varepsilon,\alpha)$) due to errors.

**5.** Method according to Claim 4, **characterized in that** the declivity is estimated on the basis of the said variation in acceleration due to errors ($\delta_{estimated}(\Delta M,\varepsilon,\alpha)$), and that the said recursive least squares algorithm depends on the said declivity ($\alpha$) and comprises two modes, a flat mode, when the declivity ($\alpha$) is situated in a predetermined interval of values corresponding to a plane surface, and a slope mode in the other cases.

**6.** Method according to any one of Claims 3 to 5, **characterized in that** during the processing of the data, an acceleration ($\gamma_{sensor}$) that would be provided by a slope sensor if there were one is moreover estimated, by means of the declivity ($\alpha$) of the surface on which the vehicle is engaged, the said declivity ($\alpha$) being provided by declivity estimation means and the said slope sensor acceleration ($\gamma_{sensor}$) being used in the said recursive least squares algorithm.

**7.** Method according to any one of Claims 3 to 6, **characterized in that** an acceleration ($\gamma_{sensor}$) provided by a slope sensor and used in the said recursive least squares algorithm is moreover processed.

**8.** Method according to Claim 7, **characterized in that** the declivity ($\alpha$) of the surface on which the vehicle is engaged is moreover calculated on the basis of the said acceleration ($\gamma_{sensor}$) provided by the said slope sensor and of the said calculation of longitudinal acceleration of the vehicle ($\gamma_{estimated}$), and that the said recursive least squares algorithm depends on the declivity ($\alpha$) and comprises two modes, a flat mode, when the declivity ($\alpha$) is situated in a predetermined interval of values corresponding to a plane surface, and a slope mode in the other cases.

9. Device for estimating the total mass of a motor vehicle, comprising wheel speed sensors, an engine torque sensor, an engine rotation rate sensor, a clutch pedal position sensor, a braking pedal position sensor, means of detecting vehicle cornering, and an electronic control unit to which said sensors are linked, **characterized in that** the electronic control unit comprises,

a means of reinitialization;
means of estimation (4) of the total mass ($M_{MCR}$) of the vehicle through a recursive least squares algorithm, comprising a calculation of the longitudinal acceleration of the vehicle ($\gamma_{estimated}$), on the basis of the fundamental equation of dynamics, through error analysis, by means of a variation in acceleration ($\delta_{estimated}(\Delta M, \varepsilon, \alpha)$) due to errors comprising an error in a variation ($\Delta M$) of the mass of the vehicle with respect to a reference mass, an error in the declivity ($\alpha$) of the surface on which the vehicle is engaged, and model errors ($\varepsilon$);
means of processing (2) of the data transmitted by the said sensors;
means of authorization (3) of the said processing of the said data when they remain respectively in intervals of predetermined values ensuring validity of the model; and
means of supervision (5) for providing a default mass so long as the said algorithm has not converged, by pegging the estimated mass when a predetermined convergence criterion is attained.

10. Device according to Claim 9, **characterized in that** it furthermore comprises a slope sensor able to transmit a longitudinal acceleration of the vehicle ($\gamma_{sensor}$) to the processing means.

**Patentansprüche**

1. Verfahren zur Schätzung der Gesamtmasse eines Kraftfahrzeugs, **dadurch gekennzeichnet, dass** die Masse (M) des Fahrzeugs durch einen rekursiven kleinste-Quadrate-Algorithmus geschätzt wird, der eine Berechnung der Längsbeschleunigung des Fahrzeugs ($\gamma_{Schätzwert}$) ausgehend von der Grundgleichung der Dynamik durch Fehleranalyse mittels einer durch Fehler verursachten Beschleunigungsänderung ($\delta_{Schätzwert}(\Delta M, \varepsilon, \alpha)$) aufweist, die einen Fehler einer Veränderung ($\Delta M$) der Masse des Fahrzeugs bezüglich einer Bezugsmasse, einen Fehler der Abschüssigkeit ($\alpha$) der Oberfläche, auf der das Fahrzeug fährt, und Modellfehler ($\varepsilon$) umfassen, wobei die Abschüssigkeit ($\alpha$) von einem Neigungssensor (23) oder von Abschüssigkeits-Schätzmitteln geliefert wird.

2. Verfahren nach Anspruch 1, **dadurch gekennzeichnet, dass** es Schritte aufweist, während denen:

Daten verarbeitet werden, die einen Rücksetzungsbefehl, die Geschwindigkeit des Fahrzeugs (V), die Drehgeschwindigkeit des Motors ($\omega_{Motor}$), das vom Motor übertragene Drehmoment ($C_{Motor}$), eine Erfassung der Betätigung der Kupplung, eine Erfassung der Betätigung der Bremsung, und eine Erfassung einer Kurvenfahrt des Fahrzeugs, um die Längsbeschleunigung des Fahrzeugs ($\gamma_{Schätzwert}$) zu berechnen, eine Resultierende (F) der Antriebskräfte ($F_{Motor}$), der aerodynamischen Kraft ($F_{aero}$) und der Rollkraft ($F_{Rollen}$), und eine äquivalente Schwungmasse ($M_j$) aufgrund der Übersetzungs-Massenkräfte umfassen.

3. Verfahren nach Anspruch 2, **dadurch gekennzeichnet, dass** es Schritte aufweist, während denen:

die Verarbeitung der Daten zugelassen wird, wenn sie innerhalb vorbestimmter Werteintervalle bleiben, die eine Gültigkeit des Modells gewährleisten;
die Gesamtmasse ($M_{MCR}$) des Fahrzeugs durch einen rekursiven kleinste-Quadrate-Algorithmus geschätzt wird;
die Schätzung der Gesamtmasse des Fahrzeugs überwacht wird, wobei eine vorbestimmte Masse geliefert wird, so lange der Algorithmus nicht konvergiert hat, wobei die geschätzte Masse gehalten wird, wenn ein vorbestimmtes Konvergenzkriterium erreicht wird.

4. Verfahren nach Anspruch 3, **dadurch gekennzeichnet, dass** außerdem eine Rückkopplung der geschätzten Masse verarbeitet wird, außerdem die Beschleunigungsänderung ($\delta_{Schätzwert}(\Delta M, \varepsilon, \alpha)$) berechnet wird, die durch Fehler verursacht wird, die einen Fehler der Veränderung ($\Delta M$) der Masse des Fahrzeugs bezüglich einer Bezugsmasse, einen Fehler der Abschüssigkeit ($\alpha$) der Oberfläche, auf der das Fahrzeug fährt, und Modellfehler ($\varepsilon$) bei der Datenverarbeitung umfassen, und eine Beschleunigung ($\gamma_{Sensor}$) geschätzt wird, die ein Neigungssensor liefern würde, wenn einer vorhanden wäre, die im rekursiven kleinste-Quadrate-Algorithmus verwendet wird, wobei die Neigungssensor-Beschleunigungsschätzung ($\gamma_{Sensor}$) die durch Fehler verursachte Beschleunigungsänderung ($\delta_{Schätzwert}(\Delta M, \varepsilon, \alpha)$) verwendet.

5. Verfahren nach Anspruch 4 **dadurch gekennzeichnet, dass** die Abschüssigkeit ausgehend von der durch Fehler

verursachten Beschleunigungsänderung ($\delta_{\text{Schätzwert}}(\Delta M,\varepsilon,\alpha)$) geschätzt wird, und dass der rekursive kleinste-Quadrate-Algorithmus von der Abschüssigkeit ($\alpha$) abhängt und zwei Modi aufweist, einen flachen Modus, wenn die Abschüssigkeit ($\alpha$) sich in einem vorbestimmten Werteintervall befindet, der einer ebenen Oberfläche entspricht, und einen Neigungs-Modus in den anderen Fällen.

6. Verfahren nach einem der Ansprüche 3 bis 5, **dadurch gekennzeichnet, dass** bei der Datenverarbeitung außerdem eine Beschleunigung ($\gamma_{\text{Sensor}}$), die ein Neigungssensor liefern würde, wenn einer vorhanden wäre, mittels der Abschüssigkeit ($\alpha$) der Oberfläche, auf der das Fahrzeug fährt, geschätzt wird, wobei die Abschüssigkeit ($\alpha$) von Abschüssigkeits-Schätzmitteln geliefert wird und die Neigungssensorbeschleunigung ($\gamma_{\text{Sensor}}$) im rekursiven kleinste-Quadrate-Algorithmus verwendet wird.

7. Verfahren nach einem der Ansprüche 3 bis 6, **dadurch gekennzeichnet, dass** außerdem eine Beschleunigung ($\gamma_{\text{Sensor}}$) verarbeitet wird, die von einem Neigungssensor geliefert wird, der im rekursiven kleinste-Quadrate-Algorithmus verwendet wird.

8. Verfahren nach Anspruch 7 **dadurch gekennzeichnet, dass** außerdem die Abschüssigkeit ($\alpha$) der Oberfläche, auf der das Fahrzeug fährt, ausgehend von der vom Neigungssensor gelieferten Beschleunigung ($\gamma_{\text{Sensor}}$) und von der Berechnung der Längsbeschleunigung des Fahrzeugs ($\gamma_{\text{Schätzwert}}$) berechnet wird, und dass der rekursive kleinste-Quadrate-Algorithmus von der Abschüssigkeit ($\alpha$) abhängt und zwei Modi aufweist, einen flachen Modus, wenn die Abschüssigkeit ($\alpha$) sich innerhalb eines vorbestimmten Werteintervalls befindet, der einer ebenen Oberfläche entspricht, und einem Neigungs-Modus in den anderen Fällen.

9. Vorrichtung zur Schätzung der Gesamtmasse eines Kraftfahrzeugs, die Radgeschwindigkeitssensoren, einen Motordrehmomentsensor, einen Drehgeschwindigkeitssensor des Motors, einen Positionssensor des Kupplungspedals, einen Positionssensor des Bremspedals, Mittel zur Erfassung der Kurvenfahrt des Fahrzeugs, und eine elektronische Steuereinheit aufweist, mit der die Sensoren verbunden sind, **dadurch gekennzeichnet, dass** die elektronische Steuereinheit aufweist: ein Rücksetzungsmittel;

Mittel (4) zur Schätzung der Gesamtmasse ($M_{\text{MCR}}$) des Fahrzeugs durch einen rekursiven kleinste-Quadrate-Algorithmus, der eine Berechnung der Längsbeschleunigung des Fahrzeugs ($\gamma_{\text{Schätzwert}}$) ausgehend von der Grundgleichung der Dynamik durch Fehleranalyse mittels einer Beschleunigungsänderung ($\delta_{\text{Schätzwert}}(\Delta M,\varepsilon,\alpha)$) aufgrund von Fehlern aufweist, die einen Fehler einer Veränderung ($\Delta M$) der Masse des Fahrzeugs bezüglich einer Bezugsmasse, einen Fehler der Abschüssigkeit ($\alpha$) der Oberfläche, auf der das Fahrzeug fährt, und Modellfehler ($\varepsilon$) umfassen;
Mittel (2) zur Verarbeitung der von den Sensoren übertragenen Daten;
Mittel (3) zum Zulassen der Verarbeitung der Daten, wenn sie innerhalb vorbestimmter Werteintervalle bleiben, die eine Gültigkeit des Modells gewährleisten; und
Überwachungsmittel (5), um eine vorgegebene Masse zu liefern, so lange der Algorithmus nicht konvergiert hat, indem die geschätzte Masse gehalten wird, wenn ein vorbestimmtes Konvergenzkriterium erreicht wird.

10. Vorrichtung nach Anspruch 9, **dadurch gekennzeichnet, dass** sie außerdem einen Neigungssensor aufweist, der in der Lage ist, an die Verarbeitungsmittel eine Längsbeschleunigung des Fahrzeugs ($\gamma_{\text{Sensor}}$) zu liefern.

# FIG.1

Réinitialisation ~6

Vitesse rotation moteur ~7

Couple moteur ~8

Embrayage ~9

Freinage ~10

Virage ~11

Vitesse ~12

2

F    15

Mj    16

$\gamma$ estimée    17

$\delta$ estimée ($\Delta M ; \varepsilon ; \alpha$)    18

4

$M_{MCR}$    19

5

20    M

20

~13

20

3    autorisation    ~14

1

EP 1 642 096 B1

# FIG.2

Réinitialisation 〜6

Vitesse rotation moteur 〜7

Couple moteur 〜8

Embrayage 〜9

Freinage 〜10

Virage 〜11

Vitesse 〜12

F   15

Mj   16

$\gamma_{estimée}$   17

$\alpha$   21

2

13

3   autorisation

14

4   $M_{MCR}$   19

5   20   M

1

EP 1 642 096 B1

# FIG.3

EP 1 642 096 B1

Réinitialisation — 6

Vitesse rotation moteur — 7

Couple moteur — 8

Embrayage — 9

Freinage — 10

Virage — 11

Vitesse — 12

$\gamma$ capteur — 22

2

F — 15

Mj — 16

$\gamma$ estimée — 17

$\gamma$ capteur — 23

4

$M_{MCR}$ — 19

5 — 20

M

13

3  autorisation — 14

FIG.4